# EUROPÄISCHE PATENTSCHRIFT

(11) **EP 3 821 308 B1**
(45) Veröffentlichungstag und Bekanntmachung des Hinweises auf die Patenterteilung: **23.04.2025**
(21) Anmeldenummer: 19731226.7
(22) Anmeldetag: 13.06.2019
(51) Int. Cl.: G05B 19/042, H04L 69/08, H04L 12/403

(54) **SYSTEM ZUR ERHEBUNG VON DATEN AUS EINER ANLAGE DER AUTOMATISIERUNGSTECHNIK**
SYSTEM FOR COLLECTING DATA FROM AN AUTOMATION SYSTEM
SYSTÈME PERMETTANT DE COLLECTER DES DONNÉES PRÉSENTES DANS UNE INSTALLATION UTILISANT DES TECHNIQUES D'AUTOMATISATION

(30) Priorität: 12.07.2018 DE 102018116891
(43) Veröffentlichungstag der Anmeldung: 19.05.2021
(73) Patentinhaber: Endress+Hauser Process Solutions AG, 4153 Reinach (CH)
(72) Erfinder: OCHSENREITHER, Steffen, 4058 Basel (CH); MANNBAR, Uwe, 68128 Village Neuf (FR)
(74) Vertreter: Endress + Hauser Group Services (Deutschland) AG+Co. KG
(86) Internationale Anmeldenummer: PCT/EP2019/065448
(87) Internationale Veröffentlichungsnummer: WO 2020/011480

(56) Entgegenhaltungen:
- EP-A2- 1 096 456
- DE-A1- 102009 049 378
- DE-A1- 102016 107 491
- GB-A- 2 477 443
- US-A1- 2016 092 388

## Beschreibung

Die Erfindung betrifft ein System zur Erhebung von Daten aus einer Anlage der Automatisierungstechnik, wobei das erfindungsgemäße System ein Kopfmodul und zumindest ein Klemmenmodul aufweist.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zur Bedienung der Feldgeräte sind entsprechende Bedienprogramme (Bedientools) notwendig, die auf den übergeordneten Einheiten entweder eigenständig ablaufen (Endress+Hauser FieldCare, Pactware, AMS Fisher-Rosemount, PDM Siemens) oder aber auch in Anwendungen des Leitstands (Siemens PCS7, ABB Symphony, Emerson Delta V) integriert sind.

Aus dem bekannten Stand der Technik offenbart die Druckschrift EP 1096456 A2 ein Sensorsystem mit einer Mehrzahl an nebeneinander auf einer DIN-Schiene montierten Sensoreinheiten, die eine bidirektionale Datenkommunikation zwischen den benachbarten Sensoreinheiten ermöglichen. Die GB 2477443 A offenbart Prozesssteuerungssysteme zur kommunikativen Kopplung von Feldgeräte mit Steuerungen. Die US 2016/092388 A1 und die DE 10 2016 107491 A1 offenbarten Feldgeräte in Verbindung mit Signaleinheiten, welche zum Austausch von Prozessdaten über einen Feldbus miteinander und mit einer Verbindungseinheit verbunden sind, die über ein externes Datennetzwerk mit einer externen Dateninfrastruktur verbunden ist.

Im Zuge der fortschreitenden Digitalisierung hinsichtlich der Schlagworte "Industrial Internet of Things (IoT)" und "Industrie 4.0", welche auch vor Komponenten von Prozessanlagen nicht Halt macht, besteht ein erhöhter Bedarf, Daten von Sensorsystemen, insbesondere Messdaten, Diagnosedaten, Parameterwerte, etc. an zentraler Stelle verfügbar zu machen und aus diesen Daten einen Mehrwert zu schaffen (Schlagworte hierfür sind "Big Data Analysis", "Predictive Maintenance", etc.). Unter der zentralen Stelle wird häufig eine über das Internet kontaktierbare Datenbank, insbesondere eine sogenannte Cloud-fähige Datenbank, verstanden. Typischerweise werden die Daten der Komponenten der Prozessanlagen, insbesondere der Feldgeräte, mittels Ethernet an die Datenbank übermittelt.

Das Grundproblem bei jeglichen solchen Anwendungen (IIoT, etc.) ist die fehlende Konnektivität der Feldgeräte zur Datenbank, da die Feldgeräte in vielen existierenden Anlagen der 4-20 mA-Technologie un/oder mittels der HART-Technologie mit den übergeordneten Einheiten kommunizieren. Hierzu sind die Feldgeräte als Zweidraht-Feldgeräte ausgelegt. Jedes dieser Feldgeräte ist mittels einer separaten Kommunikationsschleife mit der übergeordneten Einheit verbunden, welche übergeordnete Einheit typischerweise in einem Schaltschrank angeordnet ist. Typischerweise werden die Kabel der einzelnen Kommunikationsschleifen im Schaltschrank an einen Klemmenblock mit einzelnen Klemmmodulen angeschlossen und von dem Klemmenblock mit der übergeordneten Einheit verbunden. Der Klemmenblock, die übergeordnete Einheit und weitere Komponenten des Schaltschranks sind typischerweise zur Befestigung auf Hutschienen aufgezogen. Hinsichtlich der 4-20 mA-Technologie wird die Größe der von den Feldgeräten ermittelten Prozesswerte über variierende, zur aktuellen Größe der Prozesswerte korrespondierende, Energiewerte im Bereich von 4 bis 20 mA an die übergeordneten Einheiten übermittelt. Hinsichtlich der HART-Technologie wird auf das 4-20mA-Signal ein zusätzliches digitales Signal aufmoduliert.

Bei Neuanlagen kann dieses Grundproblem meist einfach gelöst werden, da dieser Punkt noch in der Planungsphase adressiert werden kann. Für bereits existente Anlagen sind zur Lösung des Problems zwar Gateways erhältlich, welche das 4-20 mA-Signal, bzw. das HART-Signal, umsetzen können. Jedoch birgt dies das Problem eines hohen Verkabelungsaufwands, da das Gateway parallel in jede einzelne Kommunikationsschleife geschaltet werden muss, wofür die Kommunikationsschleifen einzeln geöffnet werden müssen. Ebenfalls muss hierzu ausreichend Platz im Schaltschrank vorhanden sein, was bei existenten Anlagen oftmals nicht der Fall ist.

Ausgehend von dieser Problematik liegt der Erfindung die Aufgabe zugrunde, eine platzsparende Lösung anzugeben, welche es erlaubt, Daten eines nicht-ethernetfähigen Feldgeräts an zentraler Stelle verfügbar zu machen.

Die Aufgabe wird durch ein System gemäß dem Anspruch 1 gelöst.

Das Klemmenmodul kann in Form herkömmlicher Durchgangs- oder Reihenklemmen ausgestaltet sein, wie diese beispielsweise von der Firma Phoenix Contact oder der Firma Wago angeboten werden. Solche Klemmen sind dazu ausgestaltet, auf einer Hutschiene angebracht zu werden. Ein solches Klemmenmodul des erfindungsgemäßen Systems weist im Gegensatz zu den bekannten Durchgangs- oder Reihenklemmen ein Elektronikmodul auf. Mit Hilfe dieses Elektronikmodus erlaubt es das Klemmenmodul des erfindungsgemäßen Systems, Daten eines Feldgeräts auf einfache Art und Weise zu erfassen und weiterzuleiten. Das Elektronikmodul ist zu diesem Zwecke dazu ausgestaltet ist, den über die Kommunikationsschleife laufenden Datenverkehr mitzuhören. Dieser wird anschließend in ein zweites Protokoll, insbesondere in ein proprietäres Protokoll, umgewandelt und über Kontakte ausgegeben, über welche das Klemmenmodul des erfindungsgemäßen Systems im Gegensatz zu den herkömmlichen Durchgangs- oder Reihenklemmen verfügt.

Bei der Kommunikationsschleife handelt es sich um eine Zweidraht-Kommunikationsschleife. Diese ist insbesondere an ein Feldgerät der Automatisierungstechnik angeschlossen. Eine Kommunikationsschleife im Sinne der vorliegenden Erfindung verwendet die 4-20 mA-Technologie oder die HART-Technologie. Es kann vorgesehen sein, die Kommunikationsschleife auch mit weiteren geeigneten Kommunikationstechnologien zu verwenden. Feldgeräte, welche im Zusammenhang mit der Erfindung genannt werden, sind bereits im einleitenden Teil der Beschreibung beispielhaft genannt worden.

Gemäß einer vorteilhaften Ausgestaltung des Klemmenmoduls des erfindungsgemäßen Systems ist vorgesehen, dass das Elektronikmodul einen Speicher umfasst, welcher eine Identifikationsinformation des Klemmenmoduls aufweist. Diese kann zusätzlich zu den in das zweite Protokoll umgewandelten Telegrammen über die Kontakte ausgegeben werden. Es kann vorgesehen sein, dass die Identifikationsinformation editiert werden kann und beispielsweise an den Namen des Feldgeräts angepasst werden kann.

Das Kopfmodul ist von seinen Abmessungen her identisch, bzw. zumindest ähnlich wie ein Klemmenmodul des erfindungsgemäßen Systems ausgestaltet. Die von einem Klemmenmodul umgewandelten und ausgegebenen Telegramme werden von dem Kopfmodul empfangen, ggf. gesammelt, in ein drittes Protokoll, insbesondere Ethernet, umgewandelt und über die erste Netzwerkschnittstelle ausgegeben. An die Netzwerkschnittstelle wird insbesondere ein Ethernet-basiertes Netzwerk angeschlossen, beispielsweise das Internet, welches mit einer Datenbank, insbesondere einer cloudfähigen Datenbank, verbunden ist, an welche die umgewandelten Telegramme übermittelt werden. Das Kopfmodul weist insbesondere selbst keinen Anschlussbereich für eine Verbindung mit einer Kommunikationsschleife auf.

Gemäß einer vorteilhaften Ausgestaltung des Kopfmoduls des erfindungsgemäßen Systems ist es vorgesehen, dass das Kopfmodul einen Anschluss für eine Energieversorgungseinheit und eine Energieverteilungseinheit aufweist, welche Energieverteilungseinheit mit dem Anschluss und den Kontakten des Kopfmoduls verbunden ist. Auf diese Art und Weise ist zum einen das Kopfmodul selbst mit seiner zum Betrieb benötigten elektrischen Energie versorgt. Zum anderen ist es auf diese Art und Weise möglich, auf Klemmenmodule des erfindungsgemäßen Systems mit deren zum Betrieb benötigten elektrischen Energie zu versorgen.

Gemäß einer bevorzugten Ausgestaltung des Kopfmoduls des erfindungsgemäßen Systems ist es vorgesehen, dass das Kopfmodul einen Webserver aufweist. Es ist beispielsweise vorgesehen, eine Bedieneinheit an das Kopfmodul anzuschließen. Die Bedieneinheit kann auf den Webserver des Kopfmoduls zugreifen und Telegramme eines Feldgeräts (über ein Klemmenmodul) auslesen oder das Kopfmodul zu konfigurieren.

Gemäß einer vorteilhaften Ausgestaltung des Kopfmoduls des erfindungsgemäßen Systems ist es vorgesehen, dass das Kopfmodul eine zweite Netzwerkschnittstelle aufweist. Die zweite Netzwerkschnittstelle kann zum einen dieselbe Funktion wie die erste Netzwerkschnittstelle aufweisen, somit die umgewandelten Telegramme der Feldgeräte ausgeben. Alternativ kann die Netzwerkschnittstelle dazu ausgestaltet sein, einem an die zweite Netzwerkschnittstelle angeschlossenem Geräte, beispielsweise der obig erwähnten Bedieneinheit, Zugriff auf den Webserver zu gewähren.

Das erfindungsgemäße System bietet den großen Vorteil, dass Daten von Feldgeräten auf einfache Art und Weise einem ethernetbasierten Netzwerk zur Verfügung gestellt werden können, insbesondere für IIoT-Anwendungen, obwohl die Feldgeräte Ethernet auf herkömmliche Art und Weise nicht unterstützen. Der weitere große Vorteil besteht in dem geringen Platzbedarf, der für diese Lösung benötigt ist. Herkömmlicherweise befinden sich bereits Durchgangs- oder Reihenklemmen in einem Schaltschrank, welche die Kommunikationsschleifen der Feldgeräte mit übergeordneten Einheiten verbinden. Diese Klemmen müssen lediglich durch Klemmenmodule des erfindungsgemäßen Systems ausgetauscht werden. Die Verbindung der Feldgeräte zu der übergeordneten Einheit bleibt auch mithilfe der Klemmenmodule des erfindungsgemäßen Systems erhalten. Zusätzlich können die Daten der Feldgeräte ethernetkonform mitgehört und aufbereitet werden.

Gemäß einer vorteilhaften Weiterbildung umfasst das System zusätzlich ein Abschlussmodul, wobei das Abschlussmodul auf die Hutschiene aufgeschoben ist und derart ausgestaltet ist, dass es mit den Kontakten des Klemmenmoduls verbindbar ist und bei Verbindung mit den Kontakten des Klemmenmoduls ein Stromkreis, einschließend das Kopfmodul, das Klemmenmodul und das Abschlussmodul, gebildet ist. Der Stromkreis ist auf diese Art und Weise geschlossen. Die Quelle und die Senke des Stromkreises befinden sich insbesondere auf Seiten des Kopfmoduls. Gemäß einer vorteilhaften Weiterbildung umfasst das System zusätzlich weitere Klemmenmodule, welche jeweils mit einer weiteren Kommunikationsschleife eines weiteren Feldgeräts verbunden sind und welche zwischen dem Kopfmodul und dem Abschlussmodul angebracht sind, wobei sich die Kontakte der weiteren Klemmenmodule derart berühren, dass der Stromkreis die weiteren Klemmenmodule miteinschließt und wobei die weiteren Klemmenmodule dazu ausgestaltet sind, die umgewandelten Telegramme des Klemmenmoduls weiterzuleiten und insbesondere Telegramme von deren jeweiligen Kommunikationsschleifen zu empfangen, umzuwandeln und an das Kopfmodul zu übermitteln. Auf diese Art und Weise können Telegramme von mehreren Feldgeräten, bzw. mehreren Kommunikationsschleifen empfangen, bzw. mitgehört werden, und über die erste Netzwerkschnittstelle ausgegeben werden. Es kann eine Vielzahl Klemmenmodule des erfindungsgemäßen Systems verwendet werden. Es werden lediglich ein Kopfmodul und ein Abschlussmodul benötigt.

Die Kontakte der einzelnen Klemmenmodule sind derart ausgestaltet, dass diese eine gemeinsame Leitung zwischen dem Abschlussmodul und dem Kopfmodul, uns somit einen geschlossenen Stromkreis, bilden. Die Klemmenmodule, die zwischen einem Klemmenmodul, welches gerade ein in das zweite Protokoll umgewandeltes Telegramm aussendet, und dem Klopfmodul liegen sind derart ausgestaltet, dass diese das von dem sendenden Klemmenmodul ausgesendete Telegramm jeweils entlang den Klemmenmodulen weiterleiten, so dass dieses das Kopfmodul erreicht.

Neben Klemmenmodulen des erfindungsgemäßen Systems können auch herkömmliche Durchgangs- oder Reihenklemmen auf die Hutschiene zwischen dem Kopfmodul und dem Abschlussmodul eingebaut werden. Diese dienen dem herkömmlichen Zweck von Klemmen im Schaltschrank - die Kommunikationsschleife eines Feldgeräts mit einer übergeordneten Einheit zu verbinden- und verfügen über keine Elektronikeinheit. Es muss jedoch darauf geachtet werden, dass die herkömmlichen Durchgangs- oder Reihenklemmen über dieselbe Art Kontakte verfügen, wie sie die Klemmenmodule des erfindungsgemäßen Systems aufweisen. Nur so wird der Stromkreis nicht unterbrochen und Telegramme können von den Klemmenmodulen an das Kopfmodul übermittelt werden.

Gemäß einer vorteilhaften Ausgestaltung des erfindungsgemäßen Systems ist es vorgesehen, dass das Energieverteilungseinheit des Kopfmoduls dazu ausgestaltet ist, das Klemmenmodul und die weiteren Klemmenmodule mit elektrischer Energie zu versorgen. Auf diese Art und Weise können alle Klemmenmodule mit ihrer zum Betrieb benötigten elektrischen Energie versorgt werden, ohne dass die Klemmenmodule über eine eigene Energieversorgung verfügen müssen.

In einer vorteilhaften Weiterbildung umfasst das erfindungsgemäße System zusätzlich eine Bedieneinheit, welche an die zweite Netzwerkschnittstelle des Kopfmoduls angeschlossen ist und welche dazu ausgestaltet ist, auf den Webserver des Kopfmoduls zuzugreifen und über diesen Daten von dem Kopfmodul abzurufen. Bei den Daten kann es sich beispielsweise um Telegramme von den einzelnen an den Klemmenmodulen angeschlossenen Feldgeräten handeln. Es kann sich aber auch um Statusinformationen der Feldgeräte handeln. Bei der Bedieneinheit handelt es sich beispielsweise um eine Bedieneinheit im Sinne des von der Anmelderin hergestellten und vertriebenen "Field Xpert"s. Es kann sich bei der Bedieneinheit aber auch um eine Rechnereinheit, zum Beispiel einen Laptop, oder um ein mobiles Endgerät, beispielsweise ein Tablet oder ein Smartphone, handeln. Bevorzugter Weise ist vorgesehen, dass die Bedieneinheit mit dem Webserver entsprechend des FDT-Standards kommuniziert.

Gemäß einer bevorzugten Ausgestaltung des erfindungsgemäßen Systems ist es vorgesehen, dass die Elektronikeinheit dazu ausgestaltet ist, das Vorhandensein von Klemmmodulen zu überprüfen, wobei im Zuge des Überprüfens die Identifikationsinformation des jeweiligen Klemmmoduls angefragt wird.

In einer vorteilhaften Ausgestaltung des erfindungsgemäßen Systems enthält das Kopfmodul einen optischen Indikator, wobei die Elektronikeinheit des Kopfmoduls derart ausgestaltet ist, dass diese das Vorhandensein des Abschlussmoduls überprüft, und wobei der optische Indikator dazu ausgestaltet ist, im Falle das Vorhandensein des Abschlussmoduls ein optisches Signal auszusenden. Somit ist auf einfache Art und Weise - ohne, dass ein Anschließen einer Bedieneinheit erforderlich wäre - ersichtlich, ob der Stromkreis geschlossen ist oder ob ein Fehler vorliegt und die Verbindungen zwischen den einzelnen Komponenten überprüft werden müssen.

Gemäß einer bevorzugten Ausgestaltung des erfindungsgemäßen Systems ist es vorgesehen, dass der Webserver des Kopfmoduls derart ausgestaltet ist, dass dieser die vorhandenen Klemmmodule mit deren entsprechenden Identifikationsinformationen präsentiert und/oder zum Abruf bereitstellt. Die Identifikationsinformationen aller erkannten Klemmenmodule können beispielsweise über den Webserver abgefragt werden. Die Identifikationsinformationen können außerdem über den Webserver editiert werden. Des Weiteren kann es vorgesehen sein, die Identifikationsinformationen der Klemmenmodule mit Identifikationsinformationen des mit einem Klemmenmodul verbundenen Feldgeräts zu verknüpfen.

Gemäß einer vorteilhaften Ausgestaltung des erfindungsgemäßen Systems ist es vorgesehen, dass das System derart ausgestaltet ist, dass der Bedieneinheit ein Bedienen des Feldgeräts ermöglicht ist, wobei die Bedieneinheit derart ausgestaltet ist, ein Bedientelegramm an die Kopfstation zu übermitteln, wobei die Kopfstation dazu ausgestaltet ist, das Bedientelegramm in ein Telegramm konform des zweiten Protokolls umzuwandeln und an das Klemmenmodul zu übermitteln, wobei das Klemmenmodul derart ausgestaltet ist, das Telegramm in ein Telegramm konform des ersten Protokolls umzuwandeln und über die Kommunikationsschleife an das Feldgerät zu übermitteln. Auf diese Weise kann ein Feldgerät mittels der Bedieneinheit bedient werden. Bedienen im Sinne der vorliegenden Erfindung bezeichnet ein Abfragen von Messwerten, Parameterwerten, Identifikationsinformationen und/oder Diagnoseinformationen des Feldgeräts, bzw. ein Parametrieren des Feldgeräts. Die Bedieneinheit ist hierbei insbesondere an die zweite Netzwerkschnittstelle der Kopfeinheit angeschlossen.

Weiterhin kann vorgesehen sein, dass mittels der Datenbank auf die Feldgeräte zugegriffen werden kann. Die Datenbank ist hierbei mittels eines Ethernetnetzwerks an die erste Netzwerkschnittstelle der Kopfeinheit angeschlossen. Je nach Bedarf können mittels der Datenbank dieselben Bedienfunktionen wie obig bezüglich der Bedieneinheit beschrieben zugelassen sein. Alternativ kann vorgesehen sein, dass obige Bedienfunktionen nicht zugelassen werden, jedoch Updatefunktionalitäten aktiviert sind, welche mittels der Bedieneinheit nicht ermöglicht sind. Die Updatefunktionalitäten umfassen beispielsweise ein Updaten der Firmware der Feldgeräte und/oder ein Updaten des Webservers der Kopfeinheit.

Die Erfindung wird anhand der nachfolgenden Figuren näher erläutert. Es zeigt
Fig. 1: einen schematischen Querschnitt durch ein Klemmenmodul des erfindungsgemäßen Systems; und
Fig. 2: ein Ausführungsbeispiel eines erfindungsgemäßen Systems.

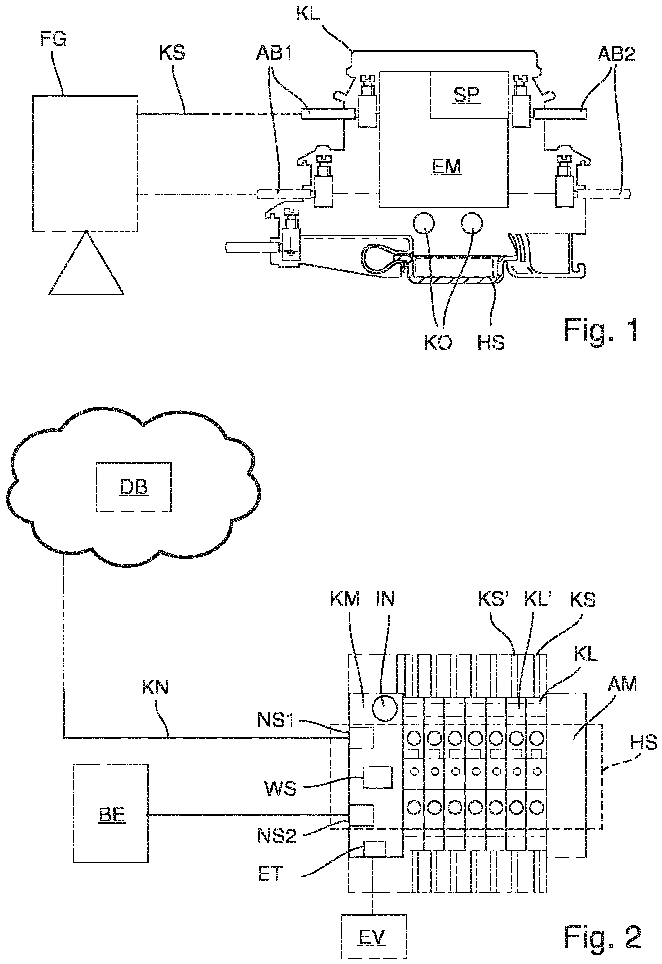

Fig. 1 zeigt einen schematischen Querschnitt durch ein Klemmenmodul KL, wie es im Sinne der Erfindung zum Einsatz kommt. Das Klemmmodul KL entspricht in seinen Abmessungen im Wesentlichen einer Durchgangsklemme oder einer Reihenklemme, wie diese in verschiedenen Ausführungen im Handel erhältlich ist. Das Klemmmodul KL weist eine Aussparung auf, mittels welcher das Klemmmodul KL auf eine Hutschiene HS aufschiebbar ist. Eine Hutschiene HS ist im vorliegenden Fall in Schaltschränken von Anlagen der Automatisierungstechnik eingebaut.

Das Klemmenmodul KL weist einen ersten Anschlussbereich AB1 und einen zweiten Anschlussbereich AB2 auf. An den ersten Anschlussbereich AB1 wird eine Kommunikationsschleife KS angeschlossen, welche von einem Feldgerät FG ausgeht. Der erste Anschlussbereich AB1 ist durch das Gehäuse des Klemmenmoduls KL mit dem zweiten Anschlussbereich AB2 verbunden. Dieser dient zum Anschluss an eine übergeordnete Einheit, beispielsweise eine speicherprogrammierbare Steuerung (SPS). Das Klemmenmodul KL dient daher, wie eine gewöhnliche Durchgangs- oder Reihenklemme dazu, eine Kommunikationsschleife KS an eine übergeordnete Einheit anzuschließen und den auf der Kommunikationsschleife übertragenen Datenverkehr an die Anschlüsse der übergeordneten Einheit durchzureichen.

Im Gegensatz zu den herkömmlichen im Stand der Technik bekannten Klemmen weist das in Fig. 1 abgebildete Klemmenmodul KL ein Elektronikmodul EM und zusätzliche Kontakte KO auf. Das Elektronikmodul dient dem Zweck, über die Kommunikationsschleife KS übertragene Telegramme mitzuhören. Im vorliegenden Beispiel handelt es sich hierbei um HART-Telegramme. Die mitgehörten Telegramme werden anschließend von dem Elektronikmodul EM entsprechend eines proprietären Protokolls umgewandelt und können via die Kontakte KO ausgegeben werden. Das Klemmenmodul KL wird außerdem über die Kontakte KO mit seiner zum Betrieb benötigten elektrischen Energie gespeist.

Fig. 2 zeigt ein Ausführungsbeispiel des erfindungsgemäßen Systems. Neben dem in Fig. 1 vorgestellten Klemmenmodul sind auf der Hutschiene HS weitere Klemmenmodule KL', ein Kopfmodul KM und ein Abschlussmodul AM aufgezogen. Ebenso wie das Klemmenmodul KL verfügen diese weiteren Komponenten über die gleichen Kontakte KO in äquivalenter Position, so dass sich die jeweiligen Kontakte der Komponenten berühren, wenn die Komponenten korrekt auf die Hutschiene aufgebracht sind. Dadurch wird ein geschlossener Stromkreis gebildet, welcher im Kopfmodul KM beginnt, entlang den Klemmenmodulen KL, KL' führt, durch das Abschlussmodul AM geführt ist und entlang den Klemmenmodulen KL, KL' am Kopfmodul endet.

Die zum Betreiben des Kopfmoduls KM und der Klemmenmodule KL, KL' benötigte elektrische Energie wird durch eine Energieversorgungseinheit EV in das Kopfmodul KM eingespeist. Eine im Kopfmodul enthaltene Energieverteilungseinheit ET dient dem Versorgen der Klemmenmodule KL, KL' über den Stromkreis mit aus der Energieversorgungseinheit EV erhaltener elektrischer Energie. Vorteilhafterweise ist das Abschlussmodul AM als passives Bauteil ausgestaltet. Das Vorhandensein des Abschlussmoduls AM und somit eines korrekt geschlossenen Stromkreises wird durch einen in dem Kopfmodul KM eingebauten optischen Indikator IN, beispielsweise in Form einer Leuchtdiode, angezeigt.

Ist das System korrekt aufgebaut, so kann das Klemmenmodul KL die in das proprietäre Protokoll umgewandelten Telegramm über den Stromkreis an das Kopfmodul KM übermitteln. Die weiteren Klemmenmodule leiten die Telegramme durch. Mittels eines im Kopfmodul KM enthaltenen Elektronikmoduls werden die Telegramme empfangen und in ein weiteres Protokoll umgewandelt. Die erneut umgewandelten Telegramme können anschließend an ein Kommunikationsnetzwerk KN übermittelt werden. Hierfür weist das Kopfmodul KM eine erste Netzwerkschnittstelle NS1 auf, welche der Verbindung mit einem drahtlosen oder einem drahtgebundenen Kommunikationsnetzwerk KN dient. Im Falle eines drahtgebundenen Kommunikationsnetzwerks handelt es sich insbesondere um ein Ethernet-basiertes Kommunikationsnetzwerk. Im Falle eines drahtlosen Kommunikationsnetzwerks handelt es sich um ein Drahtlosnetzwerk, welches nach einem der gebräuchlichen Standards, beispielsweise Bluetooth oder WiFi, ausgestaltet ist.

Die umgewandelten Telegramme werden über das Kommunikationsnetzwerk an eine cloudbasierte Datenbank DB übertragen. Auf dieser sind Anwendungsapplikationen, insbesondere im IIoT-Bereich, lauffähig, welche die empfangenen Telegramme und somit die empfangenen Daten eines Feldgeräts weiterverarbeiten und analysieren. Der Datenbank kann es auch ermöglicht sein, über das erfindungsgemäße System auf das Feldgerät zuzugreifen und beispielsweise dessen Firmware zu updaten.

Des Weiteren weist das Kopfmodul eine weitere Netzwerkschnittstelle NS2 auf. Diese dient dem Anschließen einer Bedieneinheit, beispielsweise eines mobilen Endgeräts oder eines Laptops, insbesondere basierend auf der FDT-Technologie, an das Kopfmodul KM. Das Kopfmodul KM erlaubt der Bedieneinheit BE anschließend Zugriff auf einem in das Kopfmodul KM integrierten Webserver WS. Dieser präsentiert der Bedieneinheit beispielsweise alle vorhandenen "intelligenten" Klemmenmodule KL, KL'. Zu diesem Zweck führt das Kopfmodul einen Scan aus und liest die Identifikationsinformationen der Klemmenmodule KL, KL' aus, welche jeweils in einem Speicher SP auf dem entsprechenden Klemmenmodul KL, KL' enthalten sind. Der Webserver WS präsentiert außerdem die aktuellen von den Klemmenmodulen KL, KL' empfangenen Telegramme verknüpft mit der jeweiligen Identifikationsinformation.

Mittels der Bedieneinheit BE ist außerdem ein Bedienen des Feldgeräts FG ermöglicht. Die Bedieneinheit übermittelt zu diesem Zweck ein Bedientelegramm an die Kopfstation KM. Die Kopfstation KM wandelt das Bedientelegramm anschließend in ein Telegramm konform des proprietären Protokolls um und übermittelt dieses an das entsprechende Klemmenmodul KM. Das Klemmenmodul KM selbst wiederum wandelt dieses Telegramm in ein Telegramm konform des ersten Protokolls um und übermittelt dieses über die Kommunikationsschleife KS an das Feldgerät FG. Das unter Umständen resultierende Antworttelegramm wird auf umgekehrtem Weg von dem Feldgerät FG an die Bedieneinheit BE übermittelt. Bedienen im Sinne der vorliegenden Erfindung bezeichnet ein Abfragen von Messwerten, Parameterwerten, Identifikationsinformationen und/oder Diagnoseinformationen des Feldgeräts FG, bzw. ein Parametrieren des Feldgeräts FG.

Neben dem beschriebenen Klemmenmodul KL können eine Vielzahl weiterer Klemmenmodule des erfindungsgemäßen Systems im System verwendet werden, welche jeweils an eine weitere Kommunikationsschleife KS' mit jeweils einem weiteren Feldgerät angeschlossen werden.

Neben den Klemmenmodulen des erfindungsgemäßen Systems KL, KL' können außerdem auch herkömmliche Durchgangs- oder Reihenklemmen auf die Hutschiene HS zwischen dem Kopfmodul KM und dem Abschlussmodul AM eingebaut werden. Diese dienen dem herkömmlichen Zweck von Klemmen im Schaltschrank - die Kommunikationsschleife KS, KS' eines Feldgeräts FG mit einer übergeordneten Einheit zu verbinden- und verfügen über kein Elektronikmodul EM. Es muss jedoch darauf geachtet werden, dass die herkömmlichen Durchgangs- oder Reihenklemmen über dieselbe Art Kontakte KO verfügen, wie sie die Klemmenmodule des erfindungsgemäßen Systems KL, KL' aufweisen. Nur so wird der Stromkreis nicht unterbrochen und Telegramme können von den Klemmenmodulen KL, KL' an das Kopfmodul KM übermittelt werden

### Bezugszeichenliste

- AB1, AB2: Anschlussbereiche
- AM: Abschlussmodul
- BE: Bedieneinheit
- DB: Datenbank
- EM: Elektronikmodul
- ET: Energieverteilungseinheit
- EV: Energieversorgungseinheit
- FG: Feldgerät
- HS: Hutschiene
- IN: optischer Indikator
- KL, KL': Klemmenmodul
- KM: Kopfmodul
- KN: Kommunikationsnetzwerk
- KO: Kontakte des Klemmenmoduls
- KS: Kommunikationsschleife
- NS1, NS2: erste und zweite Netzwerkschnittstelle des Kopfmoduls
- SP: Speicher in Elektronikeinheit des Klemmenmoduls
- WS: Webserver

## Patentansprüche

1. System zur Erhebung von Daten aus einer Anlage der Automatisierungstechnik, umfassend:
- Zumindest ein in der Anlage eingebundenes Feldgerät (FG);
- Eine Hutschiene (HS);
- Eine speicherprogrammierbare Steuerung, SPS;
- Zumindest ein Klemmenmodul (KL),
wobei das Klemmenmodul (KL) ein Gehäuse, einen ersten Anschlussbereich (AB1) und einen zweiten Anschlussbereich (AB2) aufweist,
wobei der erste Anschlussbereich (AB1) durch das Gehäuse mit dem zweiten Anschlussbereich (AB2) verbunden ist,
wobei die SPS an den zweiten Anschlussbereich (AB2) angeschlossen ist,
wobei an dem ersten Anschlussbereich (AB1) eine Kommunikationsschleife (KS) angeschlossen ist, über welche Kommunikationsschleife das Feldgerät (FG) mit der SPS in Kommunikationsverbindung ist, und
wobei das Feldgerät und die SPS ausgestaltet sind, über die Kommunikationsschleife (KS) Telegramme unter Verwendung eines ersten Protokolls auszutauschen,
wobei es sich bei dem ersten Protokoll um HART handelt,
wobei das Klemmenmodul (KL) erste Kontakte (KO) aufweist, welche zum Anschluss an ein weiteres Klemmenmodul (KL') ausgestaltet sind, und
wobei das Klemmenmodul (KL) ein Elektronikmodul (EM) aufweist, welches Elektronikmodul (EM) dazu ausgestaltet ist, die Telegramme, welche über die Kommunikationsschleife (KS) übertragen werden, über die Anschlussbereiche (AB1, AB2) zu empfangen, die von der Kommunikationsschleife (KS) empfangenen Telegramme in ein zweites Protokoll zu konvertieren und die konvertierten Telegramme über die ersten Kontakte (KO) auszugeben; und
- Ein Kopfmodul (KM), wobei das Kopfmodul (KM) zweite Kontakte aufweist, welche zum Anschluss an die ersten Kontakte (KO) des Klemmenmoduls (KL) ausgestaltet sind, wobei das Kopfmodul (KM) eine erste Netzwerkschnittstelle (NS1) aufweist, welche zum Anschluss an ein drahtgebundenes oder drahtloses Kommunikationsnetzwerk (KN), welches ein drittes Protokoll verwendet, ausgestaltet ist, wobei das Kopfmodul (KM) ein Elektronikmodul aufweist, welches Elektronikmodul dazu ausgestaltet ist, die von dem Klemmenmodul (KL) übertragenen, in das zweite Protokoll konvertierten Telegramme über die zweiten Kontakte zu empfangen, in das dritte Protokoll zu konvertieren und über die erste Netzwerkschnittstelle (NS1) auszugeben.

2. System nach Anspruch 1, zusätzlich umfassend ein Abschlussmodul (AM), wobei das Abschlussmodul (AM) auf die Hutschiene (HS) aufgeschoben ist und derart ausgestaltet ist, dass es mit den ersten Kontakten (KO) des Klemmenmoduls (KL) verbindbar ist und bei Verbindung mit den ersten Kontakten (KO) des Klemmenmoduls (KL) ein Stromkreis, einschließend das Kopfmodul (KM), das Klemmenmodul (KL) und das Abschlussmodul (AM), gebildet ist.

3. System nach Anspruch 2, zusätzlich umfassend weitere Klemmenmodule (KL') nach Anspruch 1, welche jeweils mit einer weiteren Kommunikationsschleife (KS') eines weiteren Feldgeräts verbunden sind und welche zwischen dem Kopfmodul (KM) und dem Abschlussmodul (AM) angebracht sind, wobei sich die ersten Kontakte der weiteren Klemmenmodule (KL') derart berühren, dass der Stromkreis die weiteren Klemmenmodule (KL') miteinschließt und wobei die weiteren Klemmenmodule (KL') dazu ausgestaltet sind, die in das zweite Protokoll konvertierten Telegramme des Klemmenmoduls (KL) weiterzuleiten und insbesondere Telegramme von deren jeweiligen Kommunikationsschleifen (KS') zu empfangen, umzuwandeln und an das Kopfmodul (KM) zu übermitteln.

4. System nach Anspruch 2, wobei das Kopfmodul (KM) einen optischen Indikator (IN) enthält, wobei das Elektronikmodul des Kopfmoduls (KM) derart ausgestaltet ist, dass dieses ein Vorhandensein des Abschlussmoduls (AM) überprüft, und wobei der optische Indikator dazu ausgestaltet ist, im Falle des Vorhandenseins des Abschlussmoduls (AM) ein optisches Signal auszusenden.

5. System nach Anspruch 1, wobei das Elektronikmodul (EM) des Klemmenmoduls (KL) einen Speicher (SP) umfasst, welcher eine Identifikationsinformation des Klemmenmoduls (KL) aufweist.

6. System nach Anspruch 1, wobei das Kopfmodul (KM) einen Anschluss für eine Energieversorgungseinheit (EV) und eine Energieverteilungseinheit (ET) aufweist, welche Energieverteilungseinheit (EV) mit dem Anschluss des Kopfmoduls und den zweiten Kontakten des Kopfmoduls (KM) verbunden ist.

7. System nach Anspruch 1 oder 6, wobei das Kopfmodul (KM) einen Webserver (WS) aufweist.

8. System nach Anspruch 1, 6 oder 7, wobei das Kopfmodul (KM) eine zweite Netzwerkschnittstelle (NS2) aufweist.

9. System nach zumindest einem der Ansprüche 6 bis 8, wobei die Energieverteilungseinheit (ET) des Kopfmoduls (KM) dazu ausgestaltet ist, das Klemmenmodul (KL) und die weiteren Klemmenmodule (KL') mit elektrischer Energie zu versorgen.

10. System nach Anspruch 8, zusätzlich umfassend eine Bedieneinheit (BE), welche an die zweite Netzwerkschnittstelle (NS2) des Kopfmoduls (KM) angeschlossen ist und welche dazu ausgestaltet ist, auf den Webserver (WS) des Kopfmoduls (KM) zuzugreifen und über diesen Daten von dem Kopfmodul (KM) abzurufen.

11. System nach Anspruch 5, wobei das Elektronikmodul (EM) des Kopfmoduls (KM) dazu ausgestaltet ist, das Vorhandensein von Klemmenmodulen (KL, KL') zu überprüfen, wobei im Zuge des Überprüfens die Identifikationsinformation des jeweiligen Klemmenmoduls (KL, KL') angefragt wird.

12. System nach Anspruch 11, wobei der Webserver (WS) des Kopfmoduls (KM) derart ausgestaltet ist, dass dieser die vorhandenen Klemmenmodule (KL, KL') mit deren entsprechenden Identifikationsinformationen präsentiert und/oder zum Abruf bereitstellt.

13. System nach zumindest einem der Ansprüche 10 oder 12, wobei das System derart ausgestaltet ist, dass der Bedieneinheit (BE) ein Bedienen des Feldgeräts (FG) ermöglicht ist, wobei die Bedieneinheit (BE) derart ausgestaltet ist, ein Bedientelegramm an das Kopfmodul (KM) zu übermitteln, wobei das Kopfmodul (KM) dazu ausgestaltet ist, das Bedientelegramm in ein Telegramm konform des zweiten Protokolls umzuwandeln und an das Klemmenmodul (KL) zu übermitteln, wobei das Klemmenmodul (KL) derart ausgestaltet ist, das Telegramm in ein Telegramm konform des ersten Protokolls umzuwandeln und über die Kommunikationsschleife (KS) an das Feldgerät (FG) zu übermitteln.

## Claims

1. System for collecting data from an automation technology system, comprising:
- At least one field device (FG) integrated in the system;
- A top-hat rail (HS);
- A programmable logic controller, PLC;
- At least one terminal module (KL),
wherein the terminal module (KL) has a housing, a first connection area (AB1) and a second connection area (AB2),
whereby the first connection area (AB1) is connected to the second connection area (AB2) through the housing,
where the PLC is connected to the second connection area (AB2),
wherein a communication loop (KS) is connected to the first connection area (AB1), via which communication loop the field device (FG) is in communication connection with the PLC, and
whereby the field device and the PLC are designed to exchange telegrams via the communication loop (KS) using a first protocol,
whereby the first protocol is HART,
wherein the terminal module (KL) has first contacts (KO) which are designed for connection to a further terminal module (KL'), and
wherein the terminal module (KL) has an electronic module (EM), which electronic module (EM) is designed to receive the telegrams which are transmitted via the communication loop (KS) via the connection areas (AB1, AB2), to convert the telegrams received by the communication loop (KS) into a second protocol and to receive the telegrams which are transmitted via the communication loop (KS) into a second protocol, which are transmitted via the communication loop (KS), via the connection areas (AB1, AB2), converting the telegrams received from the communication loop (KS) into a second protocol and outputting the converted telegrams via the first contacts (KO); and
- A head module (KM), wherein the head module (KM) has second contacts which are designed for connection to the first contacts (KO) of the terminal module (KL), wherein the head module (KM) has a first network interface (NS1) which is designed for connection to a wired or wireless communication network (KN) which uses a third protocol, the head module (KM) having an electronic module which is designed to receive the telegrams transmitted by the terminal module (KL) and converted into the second protocol via the second contacts, to convert them into the third protocol and to output them via the first network interface (NS1).

2. System according to claim 1, additionally comprising a termination module (AM), wherein the termination module (AM) is pushed onto the top-hat rail (HS) and is designed in such a way that it can be connected to the first contacts (KO) of the terminal module (KL) and, when connected to the first contacts (KO) of the terminal module (KL), a circuit including the head module (KM), the terminal module (KL) and the termination module (AM) is formed.

3. System according to claim 2, additionally comprising further terminal modules (KL') according to claim 1, which are each connected to a further communication loop (KS') of a further field device and which are mounted between the head module (KM) and the termination module (AM), wherein the first contacts of the further terminal modules (KL') touch each other in such a way that the circuit includes the further terminal modules (KL') and wherein the further terminal modules (KL') are designed to receive the telegrams of the terminal module (KL') converted to the second protocol, that the circuit includes the further terminal modules (KL') and wherein the further terminal modules (KL') are designed to forward the telegrams of the terminal module (KL) converted into the second protocol and in particular to receive telegrams from their respective communication loops (KS'), to convert them and to transmit them to the head module (KM).

4. System according to claim 2, wherein the head module (KM) contains an optical indicator (IN),
wherein the electronic module of the head module (KM) is designed such that it checks for the presence of the termination module (AM), and wherein the optical indicator is designed to emit an optical signal if the termination module (AM) is present.

5. System according to claim 1, wherein the electronic module (EM) of the terminal module (KL) comprises a memory (SP) which has identification information of the terminal module (KL).

6. The system according to claim 1, wherein the head module (KM) has a connection for a power supply unit (EV) and a power distribution unit (ET), which power distribution unit (EV) is connected to the connection of the head module and the second contacts of the head module (KM).

7. System according to claim 1 or 6, wherein the head module (KM) comprises a web server (WS).

8. System according to claim 1, 6 or 7, wherein the head module (KM) has a second network interface (NS2).

9. System according to at least one of claims 6 to 8, wherein the energy distribution unit (ET) of the head module (KM) is designed to supply the terminal module (KL) and the further terminal modules (KL') with electrical energy.

10. System according to claim 8, additionally comprising an operating unit (BE) which is connected to the second network interface (NS2) of the head module (KM) and which is designed to access the web server (WS) of the head module (KM) and to retrieve data from the head module (KM) via this.

11. System according to claim 5, wherein the electronic module (EM) of the head module (KM) is designed to check the presence of terminal modules (KL, KL'), wherein the identification information of the respective terminal module (KL, KL') is requested in the course of the check.

12. System according to claim 11, wherein the web server (WS) of the head module (KM) is configured such that it presents and/or makes available for retrieval the existing terminal modules (KL, KL') with their corresponding identification information.

13. System according to at least one of claims 10 or 12, wherein the system is configured such that the operating unit (BE) is enabled to operate the field device (FG), wherein the operating unit (BE) is configured such that it transmits an operating telegram to the head module (KM), wherein the head module (KM) is configured for this purpose, converting the operating telegram into a telegram conforming to the second protocol and transmitting it to the terminal module (KL), the terminal module (KL) being configured such that it converts the telegram into a telegram conforming to the first protocol and transmits it to the field device (FG) via the communication loop (KS).

## Revendications

1. Système de collecte de données d'une installation de la technique d'automatisation, comprenant :
- Au moins un appareil de terrain (FG) intégré dans l'installation ;
- Un profilé chapeau (HS) ;
- Un automate programmable industriel, API ;
- Au moins un module à bornes (KL),
dans lequel le module de bornes (KL) comprend un boîtier, une première zone de connexion (AB1) et une seconde zone de connexion (AB2),
dans lequel la première partie de connexion (AB1) est connectée à la seconde partie de connexion (AB2) par le boîtier,
l'API étant connecté à la deuxième zone de connexion (AB2),
une boucle de communication (KS) étant raccordée à la première zone de raccordement (AB1), boucle de communication par laquelle l'appareil de terrain (FG) est en liaison de communication avec l'API, et
l'appareil de terrain et l'API étant configurés pour échanger des télégrammes par l'intermédiaire de la boucle de communication (KS) en utilisant un premier protocole,
le premier protocole étant HART,
le module de bornes (KL) présentant des premiers contacts (KO) qui sont conçus pour le raccordement à un autre module de bornes (KL'), et
le module de bornes (KL) présentant un module électronique (EM), lequel module électronique (EM) est conçu pour transmettre les télégrammes, qui sont transmis par la boucle de communication (KS), par l'intermédiaire des zones de raccordement (AB1, AB2), de convertir les télégrammes reçus par la boucle de communication (KS) en un deuxième protocole et de délivrer les télégrammes convertis par l'intermédiaire des premiers contacts (KO) ; et
- Un module de tête (KM), le module de tête (KM) comprenant des deuxièmes contacts adaptés pour être connectés aux premiers contacts (KO) du module de borne (KL), le module de tête (KM) comprenant une première interface de réseau (NS1) adaptée pour être connectée à un réseau de communication filaire ou sans fil (KN) utilisant un troisième protocole, le module de tête (KM) comportant un module électronique, lequel module électronique est conçu pour recevoir, par l'intermédiaire des deuxièmes contacts, les télégrammes transmis par le module de bornes (KL) et convertis dans le deuxième protocole, pour les convertir dans le troisième protocole et pour les délivrer par l'intermédiaire de la première interface de réseau (NS1).

2. Système selon la revendication 1, comprenant en outre un module de terminaison (AM), le module de terminaison (AM) étant enfilé sur le profilé chapeau (HS) et étant conçu de telle sorte qu'il peut être relié aux premiers contacts (KO) du module de bornes (KL) et qu'en cas de liaison avec les premiers contacts (KO) du module de bornes (KL), un circuit électrique est formé, y compris le module de tête (KM), le module de bornes (KL) et le module de terminaison (AM).

3. Système selon la revendication 2, comprenant en outre d'autres modules de bornes (KL') selon la revendication 1, qui sont chacun reliés à une autre boucle de communication (KS') d'un autre appareil de terrain et qui sont montés entre le module de tête (KM) et le module de terminaison (AM), les premiers contacts des autres modules de bornes (KL') se touchant de telle manière, de sorte que le circuit électrique inclut les autres modules de bornes (KL') et les autres modules de bornes (KL') étant conçus pour retransmettre les télégrammes du module de bornes (KL) convertis dans le deuxième protocole et, en particulier, pour recevoir des télégrammes de leurs boucles de communication respectives (KS'), les convertir et les transmettre au module de tête (KM).

4. Système selon la revendication 2, dans lequel le module de tête (KM) comprend un indicateur optique (IN), dans lequel le module électronique du module de tête (KM) est configuré de telle sorte que celui-ci vérifie la présence du module de terminaison (AM), et dans lequel l'indicateur optique est configuré pour émettre un signal optique en cas de présence du module de terminaison (AM).

5. Système selon la revendication 1, dans lequel le module électronique (EM) du module de bornes (KL) comprend une mémoire (SP) qui comporte une information d'identification du module de bornes (KL).

6. Système selon la revendication 1, dans lequel le module de tête (KM) comprend une connexion pour une unité d'alimentation en énergie (EV) et une unité de distribution d'énergie (ET), laquelle unité de distribution d'énergie (EV) est connectée à la connexion du module de tête et aux deuxièmes contacts du module de tête (KM).

7. Système selon la revendication 1 ou 6, dans lequel le module de tête (KM) comprend un serveur web (WS).

8. Système selon la revendication 1, 6 ou 7, dans lequel le module de tête (KM) comprend une deuxième interface réseau (NS2).

9. Système selon au moins l'une des revendications 6 à 8, dans lequel l'unité de distribution d'énergie (ET) du module de tête (KM) est configurée pour alimenter en énergie électrique le module de bornes (KL) et les autres modules de bornes (KL').

10. Système selon la revendication 8, comprenant en outre une unité de commande (BE) qui est raccordée à la deuxième interface de réseau (NS2) du module de tête (KM) et qui est conçue pour accéder au serveur web (WS) du module de tête (KM) et pour appeler des données du module de tête (KM) par l'intermédiaire de celui-ci.

11. Système selon la revendication 5, dans lequel le module électronique (EM) du module de tête (KM) est configuré pour vérifier la présence de modules de bornes (KL, KL'), l'information d'identification du module de bornes respectif (KL, KL') étant demandée au cours de la vérification.

12. Système selon la revendication 11, dans lequel le serveur web (WS) du module de tête (KM) est configuré de telle sorte que celui-ci présente et/ou met à disposition pour appel les modules de bornes (KL, KL') existants avec leurs informations d'identification correspondantes.

13. Système selon au moins l'une des revendications 10 ou 12, le système étant configuré de manière à permettre à l'unité de commande (BE) de commander l'appareil de terrain (FG), l'unité de commande (BE) étant configurée de manière à transmettre un télégramme de commande au module de tête (KM), le module de tête (KM) étant configuré pour cela, convertir le télégramme de commande en un télégramme conforme au deuxième protocole et le transmettre au module de bornes (KL), le module de bornes (KL) étant conçu de manière à convertir le télégramme en un télégramme conforme au premier protocole et à le transmettre à l'appareil de terrain (FG) via la boucle de communication (KS).
